# EUROPEAN PATENT APPLICATION

(11) **EP 0 761 282 A2**
(43) Date of publication of application: **12.03.1997**
(21) Application number: 96305783.1
(22) Date of filing: 06.08.1996
(51) Int. Cl.: B01D 53/04, C01B 13/02

(54) **Pressure swing adsorption apparatus**

(30) Priority: 08.09.1995 GB 9518330
(71) Applicant: The BOC Group plc, Windlesham Surrey GU20 6HJ (GB)
(72) Inventor: Garrett, Michael Ernest, Woking, Surrey, GU22 7XR (GB)
(74) Representative: Gough, Peter

(57) **Abstract**

An apparatus for producing high purity oxygen from air comprises a pressure vessel in which is located a first bed of absorbent which preferentially absorbs nitrogen and spaced therefrom a second bed of absorbent which preferentially absorbs argon. A high purity oxygen product stream leaves the vessel via an outlet.

## Description

The present invention relates to methods of and apparatus for the production of high purity oxygen from air using pressure swing adsorption (PSA) techniques.

It is known to produce oxygen from air by pressure swing adsorption (PSA) techniques. Air under pressure is passed through a pressure vessel containing an adsorbent which has the ability to effect the separation as between the two major components of air by virtue of its more rapid adsorption of nitrogen than of oxygen. The adsorbent is usually a bed of zeolite such as 5A/3X.

In operation, a bed of the adsorbent is put through a cycle which includes an adsorption step during which time air is pumped through the bed under pressure and most of the nitrogen and a small proportion of the oxygen are adsorbed and an oxygen rich product gas is supplied from the outlet of the pressure vessel; and a desorption or regeneration step during which time the outlet of the pressure vessel is closed, the bed is vented to atmospheric pressure and/or evacuated usually through the inlet of the pressure vessel so that the adsorbed gases are substantially removed from the bed thereby preparing it for the next adsorption step.

In practice, it is usual for two pressure vessels to be employed each containing a bed of adsorbent and operated on similar cycles which are sequenced to be out of phase with one another by 180^{m} so that when one bed is on its adsorption step, the other bed is on its regeneration step and vice-versa. Between the adsorption and the regeneration steps the pressures in the two pressure vessels are equalised by connecting the inlets to each pressure vessel together. With this connection made, the gases within the void spaces of the bed which has just completed its adsorption step flows into the bed which has just completed its regenerated step by virtue of the pressure difference which exists between the pressure vessels at this stage which is beneficial in maximising product, that is oxygen output because the gas in the void space will have become somewhat enriched in oxygen.

Such known oxygen producing PSA apparatus usually is expected to produce a product gas between 93 and 95% by volume of oxygen, the remaining gases being argon and nitrogen.

In order to reduce the percentage of argon in the product gas, it is known to pass the product gas under pressure through a further pressure vessel containing carbon sieve which preferentially adsorbs oxygen and thereby separates the oxygen from the argon which can be vented to atmosphere.

There are however, disadvantages to this known method of reducing the argon content of the eventual product gas. For example, the risk of explosion/fire associated with an oxygen rich gas under pressure and a carbon sieve. Also the incompatibility between the usual cycle times of the main nitrogen removal PSA cycle and the argon removal PSA cycle.

United States Patent Number 5226933 describes a method of producing high purity oxygen product gas from a feed gas mixture of 95% by volume oxygen and 5% by volume argon. The feed gas mixture is supplied under pressure to a pressure vessel containing, as an adsorbent material, silver mordenite which preferentially adsorbs argon. An oxygen purity of at least 99.7% is said to be achievable.

However, with this method the feed gas mixture of 95% by volume oxygen and 5% by volume argon must first be obtained by passing for example, air through a PSA process to remove nitrogen.

It is an aim of the present invention to provide a method of and an apparatus for producing high purity oxygen containing up to 99% by volume of oxygen using PSA techniques which overcomes the aforementioned disadvantages.

In particular, it is an aim to provide an apparatus which makes use of a zeolite sieve which has a strong affinity for argon to remove argon from the product gas stream.

It is a further aim of the present invention to include within a single pressure vessel of a PSA apparatus for producing oxygen; a first bed of zeolite for adsorbing nitrogen and a second bed of zeolite for adsorbing argon.

According to one aspect of the present invention, an apparatus for producing high purity oxygen from air comprises a pressure vessel having an inlet for air under pressure and an outlet for the high purity oxygen, a first bed of adsorbent located in the vessel for adsorbing preferentially nitrogen to provide an oxygen rich gas stream and a second bed of adsorbent located in the vessel between the first bed and the outlet for adsorbing preferentially argon to provide a high purity oxygen product stream.

In a preferred embodiment the second bed is a silver mordenite sieve which is spaced from the first bed by a layer of non-adsorbing material such as alumina, ceramic or glass beads. This non-adsorbing layer functions to control the temperature of the silver mordenite sieve.

The first bed may be any nitrogen adsorbing zeolite for example 5A/3X or a cation substituted variety thereof.

Preferably, a layer of alumina is located in the pressure vessel at a location between the inlet and the first bed.

According to a further aspect of the present invention a method of a method of producing high purity oxygen from air within a single pressure vessel, comprises the step of passing the air under pressure through a first bed of adsorbent which preferentially adsorbs nitrogen to produce an oxygen rich gas stream and passing said oxygen rich gas stream through a second bed of adsorbent which preferentially adsorbs argon such that high purity oxygen exits the vessel as product gas.

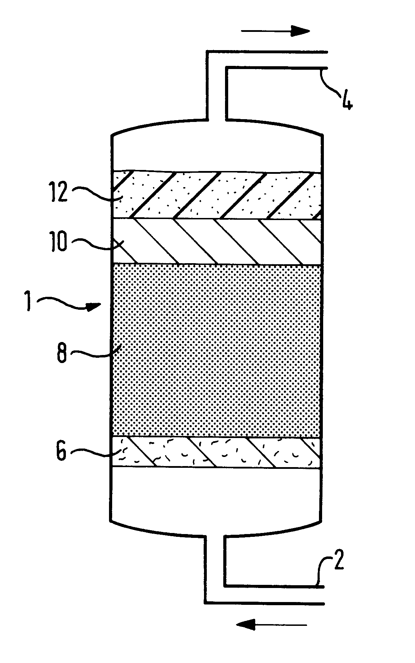

An embodiment of the invention will now be described by way of example, with reference to the Figure of the accompanying diagrammatic drawing which is a schematic view of a pressure vessel forming part of a pressure swing adsorption plant for producing high purity oxygen.

As shown, a pressure vessel 1 forming part of a pressure swing adsorption plant for the separation of high purity oxygen from feed air includes an inlet 2 for the feed air and an outlet 4 for product gas.

Immediately adjacent the inlet 2 within the vessel 1 there is located an alumina layer 6 for removing water/water vapour and carbon dioxide from the feed air.

Immediately above (as shown) the layer 6 of alumina is a bed 8 of an adsorbent, for example, zeolite 5A/3X which preferentially adsorbs nitrogen.

Immediately above the bed 8 is a layer of a non-adsorbing material such as alumina, ceramic or glass beads.

Between the layer 10 and the outlet 4 there is located a second bed 12 of an adsorbent which preferentially adsorbs argon for example, silver mordenite.

In use, when the pressure vessel 1 is in its adsorption mode, feed air under pressure enters the inlet 2. As previously explained, the alumina layer 6 removes water/water vapour from the feed air which then passes through the bed 8 where substantially all the nitrogen is adsorbed leaving an oxygen rich gas stream but with some argon to pass through the non-adsorbent layer 10 to reach the second bed 12 where substantially all the argon is adsorbed leaving a product gas of up to 99% by volume of oxygen.

The regenerative step essentially consists of venting the vessel 1 in a reverse direction such that the adsorbed gases are then desorbed. A purge of product quality gas can be introduced initially to the interior of the vessel via the outlet 4 to further scour the beds and subsequently back fill the beds with product quality gas.

As previously explained, the pressure vessel 1 will usually form part of a PSA plant including two or more pressure vessels in a manner known per se, in which case a pressure equalisation step will also be included in the cycle and this may either be top to top or top to bottom communication from the high pressure bed to the lower pressure bed.

The particular function of the non-adsorbent layer 10 included in the upper part of the pressure vessel 1 is to control the temperature within the vessel. If the non-adsorbent layer 10 were not included, the vessel 1 would operate at a higher temperature at its higher upper end than the lower end of the vessel 1 which would be disadvantageous in terms of adsorption capacity. By using the non-adsorbing layer 10, the temperature of the silver mordenite bed can be held substantially below that of the zeolite bed 8 thereby achieving a better balance of the material properties.

A particular advantage of the embodiment described above is that the extraction of nitrogen and argon takes place in a single pressure vessel and the use of zeolite such as silver mordenite eliminates the possibility of fire/explosions. Furthermore, the containment of the air separation process in one pressure vessel is much more effective than the previous systems, in which an extra pressure vessel is needed to separate argon from oxygen.

## Claims

1. An apparatus for producing high purity oxygen from air comprising a vessel 1 having an inlet 2 for air under pressure and an outlet 4 for high purity oxygen and a first bed 8 of adsorbent located in the vessel 1 for adsorbing preferentially nitrogen to provide an oxygen rich gas stream is characterised by a second bed 12 of adsorbent located in the vessel 1 between the first bed 8 and the outlet 4 for adsorbing preferentially argon to provide a high purity oxygen product stream.

2. An apparatus as claimed in Claim 1, in which the second bed 12 is a silver mordenite sieve.

3. An apparatus as claimed in Claim 2, in which the second bed 12 of silver mordenite sieve is spaced from the first bed 8 by a layer 10 of non adsorbing material.

4. An apparatus as claimed in Claim 3, in which the non-adsorbing material is alumina or ceramic or glass beads.

5. An apparatus as claimed in any one of Claims 1 to 4 in which a layer 6 of alumina is located in the vessel immediately adjacent the inlet 2.

6. A method of producing high purity oxygen from air within a single pressure vessel, comprising the step of passing the air under pressure through a first bed of adsorbent which preferentially adsorbs nitrogen to produce an oxygen rich gas stream and passing said oxygen rich gas stream through a second bed of adsorbent which preferentially adsorbs argon such that high purity oxygen exits the vessel as product gas.

7. A method as claimed in Claim 6 including the step of removing water/water vapour and some carbon dioxide from the feed air prior to passing the feed air through the bed of molecular sieve adsorbent which preferentially adsorbs nitrogen.
